# FASCICULE DE BREVET EUROPEEN

(11) **EP 3 256 408 B1**
(45) Date de publication et mention de la délivrance du brevet: **08.12.2021**
(21) Numéro de dépôt: 16707897.1
(22) Date de dépôt: 11.02.2016
(51) Int. Cl.: B65G 47/90, B65G 54/02

(54) **INSTALLATION DE TRAITEMENT DE RÉCIPIENTS COMPRENANT UNE STATION DE TRAITEMENT ET UN DISPOSITIF DE TRANSFERT LATÉRAL DE RÉCIPIENTS**
ANLAGE ZUR BEHANDLUNG VON BEHÄLTERN MIT EINER BEHANDLUNGSSTATION UND VORRICHTUNG ZUM SEITLICHEN TRANSFER VON BEHÄLTERN
FACILITY FOR TREATING CONTAINERS COMPRISING A TREATMENT STATION AND A DEVICE FOR LATERAL TRANSFER OF CONTAINERS

(30) Priorité: 13.02.2015 FR 1551199
(43) Date de publication de la demande: 20.12.2017
(73) Titulaire: Sidel Participations, 76930 Octeville-sur-Mer (FR)
(72) Inventeur: BILLAULT, Romain, 76930 Octeville-sur-Mer (FR)
(74) Mandataire: Sidel Group
(86) Numéro de dépôt international: PCT/FR2016/050307
(87) Numéro de publication internationale: WO 2016/128680

(56) Documents cités:
- DE-A1-102012 201 059
- DE-A1-102013 206 125
- JP-A- S58 160 071
- US-A1- 2002 148 704
- US-B1- 6 428 267
- US-B1- 6 575 691

## Description

### DOMAINE TECHNIQUE DE L'INVENTION

L'invention concerne une installation de traitement de récipients, notamment de récipients réalisés en matériau thermoplastique, comprenant une station de traitement et un dispositif de convoyage de récipients le dispositif comportant au moins un chariot de convoyage mobile, le chariot de convoyage comportant :
- une première navette susceptible de circuler de manière indépendante le long d'un rail de guidage formant un circuit ;
- et un organe de préhension du récipient qui est relié à ladite première navette.

### ARRIERE PLAN TECHNIQUE DE L'INVENTION

Il est connu de réaliser des récipients finis, tels que des bouteilles en matériau thermoplastique par soufflage de récipients initiaux ou intermédiaires, tels que des préformes ou des ébauches de récipients préalablement chauffées.

Dans la suite de la description, lorsque la distinction ne sera pas nécessaire, les récipients initiaux ou intermédiaires (préformes ou ébauches), de même que les récipients finaux (bouteilles ou autres) seront désignés par le terme général de récipient(s). Sinon, la distinction sera faite.

La production et le traitement en grande série de tels récipients finaux est réalisée au moyen d'une installation qui comporte plusieurs stations de traitement parmi lesquelles on retrouve au moins une station de chauffage des préformes ou ébauches et une station de soufflage qui est équipée de plusieurs moules de soufflage. L'installation peut être complétée par diverses autres stations, par exemple une station de stérilisation des récipients, une station d'étiquetage des récipients finis, une station de remplissage des récipients finis, une station de bouchage des récipients remplis...

Dans la suite de la description, à moins qu'il ne soit nécessaire de distinguer, le terme "traitement" s'appliquera indifféremment à la fabrication de récipients finaux ou à l'un ou l'autre de leurs traitements ultérieurs (remplissage, étiquetage, bouchage, etc...).

Pour permettre de traiter des récipients à cadence élevée, il est connu que les récipients défilent à travers chacune des stations. A cet effet, chaque station est munie d'un dispositif de transport des récipients.

Par exemple, la station de soufflage comporte plusieurs moules qui sont par exemple portés par un carrousel qui tourne de manière que les préformes soient soufflées les unes après les autres à grande cadence pendant leur déplacement entre un point d'introduction correspondant à l'introduction des préformes dans un moule associé, et un point de démoulage correspondant à l'éjection des récipients formés à l'extérieur des moules.

Selon encore un autre exemple, la station de chauffage comporte un tunnel de chauffage équipé d'un dispositif de transport de préformes ou d'ébauches formé par une chaîne, chaque maillon de la chaîne étant muni d'un organe de transport formé par exemple par un mandrin.

Les récipients sont transportés en file d'une station de traitement à l'autre par l'intermédiaire de dispositifs de convoyage. Il est connu que de tels dispositifs soient formés par des roues de transfert munies à leur périphérie d'organes de préhension telles que des encoches ou des pinces montées sur des bras de transfert.

Les organes de préhension des dispositifs de convoyage sont ainsi mobiles le long de circuits fermés. De même, les organes de transport des différentes stations sont montés mobiles le long de circuits fermés.

Les roues de transfert et les carrousels sont généralement agencés de manière que les trajectoires des organes de convoyage et des organes de transport soient tangentes pour permettre le transfert des récipients entre chaque dispositif de convoyage et la station de traitement associée.

Cependant, cet agencement tangentiel oblige à effectuer le transfert des récipients dans une zone de transfert sensiblement ponctuelle. Or, cette opération de transfert requiert d'autant plus de temps que la zone de transfert est réduite. La vitesse de défilement des récipients se trouve par conséquent limitée pour garantir que le récipient ne tombe pas pendant le transfert.

Pour résoudre ce problème, on a déjà proposé d'équiper les roues de transfert de bras articulés dont chacun comporte un organe de préhension d'un récipient et qui sont agencés de façon à permettre des mouvements complexes des organes de préhension combinant des mouvements de rotation, d'allongement, de rétraction, d'accélération ou de décélération des bras et, en conséquence, des organes de préhension. De ce fait, la trajectoire (c'est-à-dire la courbe de déplacement et la vitesse) de l'organe de préhension est susceptible de se superposer à la trajectoire de l'organe de transport de la station de traitement associée sur un tronçon plus grand que la zone ponctuelle précédemment décrite. De tels bras, qui sont par exemple décrits dans le brevet US 4,355,968, sont utilisés dans toutes les machines de la demanderesse.

Néanmoins, de tels bras articulés comportent de nombreux éléments mécaniques mobiles. Ils font partie d'un mécanisme complexe à cames et à galets, avec des pièces d'usure et/ou des pièces nécessitant de fréquentes lubrifications. De ce fait, ils sont onéreux à fabriquer et à entretenir et ne sont pas forcément adaptés à des environnements propres ou stériles.

De plus, le poids de tels bras de transfert limite la cadence de défilement des récipients.

Par ailleurs, pour chaque station de traitement, il est actuellement nécessaire de disposer d'une première roue de transfert pour alimenter la station de traitement en récipients, et d'une deuxième roue de transfert pour décharger les récipients après leur traitement.

Une telle installation est donc onéreuse et encombrante.

Le document DE 10 2013 206125 A1 divulgue une installation selon le préambule de la revendication 1.

### BREF RESUME DE L'INVENTION

Pour résoudre ces problèmes, l'invention propose une installation de traitement de récipients, notamment de récipients réalisés en matériau thermoplastique, selon la revendication 1 comprenant au moins un dispositif de convoyage de récipients, le dispositif comportant au moins un chariot de convoyage mobile, le chariot de convoyage comportant : une première navette susceptible de circuler de manière indépendante le long d'un rail de guidage formant un circuit ; et un organe de préhension du récipient qui est lié mécaniquement à ladite première navette; dans laquelle le chariot de convoyage comporte une deuxième navette susceptible de circuler de manière indépendante de la première navette le long du circuit, la deuxième navette étant montée mobile sur un rail de guidage, ledit organe de préhension étant lié mécaniquement à chacune des première et deuxième navettes par l'intermédiaire d'un mécanisme comportant au moins une première bielle et une seconde bielle articulées en ciseau l'une à l'autre, la première bielle étant par ailleurs articulée autour d'un axe de rotation sur la première navette, et la seconde bielle étant par ailleurs articulée autour d'un axe de rotation sur la deuxième navette, de sorte que la position transversale et la trajectoire de l'organe de préhension peuvent être contrôlées en fonction de l'écartement des deux navettes et de leur vitesse de déplacement; dans laquelle le dispositif comporte une pluralité de chariots qui défilent le long du circuit, caractérisée en ce que l'installation comprend une station de traitement de récipients, et en ce que la première navette de chaque chariot est formée par la deuxième navette du chariot précédent, les chariots étant ainsi reliés en chaîne par l'intermédiaire de la liaison mécanique articulée avec les organes de préhension.

Selon d'autres caractéristiques de l'invention :
- chaque navette et son rail de guidage associé forment un moteur linéaire ;
- le moteur linéaire est en circuit fermé ;
- les deux navettes sont montées sur un rail de guidage commun ;
- les deux navettes sont montées sur un rail de guidage distinct ;
- le dispositif de convoyage comporte une pluralité de chariots qui défilent le long du circuit ;
- chaque chariot comporte une paire individuelle de navettes associées.

L'invention propose aussi un procédé d'utilisation d'une installation de traitement de récipients en matériau thermoplastique selon la revendication 7 comportant au moins une station de traitement de récipients et au moins un dispositif de convoyage réalisé selon les enseignements de l'invention, l'installation comportant au moins un dispositif de transport des récipients le long d'une trajectoire de traitement déterminée depuis une première zone de transfert, dite de chargement, jusqu'à une deuxième zone de transfert, dite de déchargement, le dispositif de transport comportant au moins un organe de transport individuel qui se déplace le long d'une trajectoire, caractérisé en ce que l'écartement des navettes d'un chariot et leur vitesse de déplacement sont commandés de manière que la trajectoire de l'organe de préhension du chariot soit superposée à un tronçon de trajectoire de l'organe de transport du dispositif de transport dans au moins l'une des zones de transfert.

Selon d'autres caractéristiques du procédé d'utilisation réalisé selon les enseignements de l'invention :
- la zone de chargement est agencée en aval de la zone de déchargement selon le sens de déplacement des chariots de convoyage, la trajectoire de l'organe de préhension étant superposée successivement avec la trajectoire de l'organe de transport dans la zone de déchargement puis dans la zone de chargement ;
- les récipients sont chargés et déchargés sur ledit dispositif de convoyage, un chariot sur deux étant laissé libre en amont de la zone de déchargement selon le sens de déplacement des chariots ;
- le dispositif de transport est formé par un carrousel.

### BREVE DESCRIPTION DES FIGURES

D'autres caractéristiques et avantages de l'invention apparaitront au cours de la lecture de la description détaillée qui va suivre pour la compréhension de laquelle on se reportera aux dessins annexés dans lesquels :
- la figure 1 est une vue de dessus qui représente schématiquement une installation de fabrication de récipients équipée d'un dispositif de convoyage réalisé selon les enseignements de l'invention ;
- la figure 2 est une vue de dessus qui représente schématiquement une deuxième installation de fabrication de récipients équipée d'un dispositif de convoyage réalisé selon un deuxième mode de réalisation de l'invention.

### DESCRIPTION DETAILLEE DES FIGURES

Dans la suite de la description, des éléments présentant une structure identique ou des fonctions analogues seront désignés par des mêmes références.

Dans la suite de la description, on adoptera à titre non limitatif un repère attaché individuellement à chaque navette 18. Ledit repère présente une orientation longitudinale dirigée d'arrière en avant selon le sens de déplacement des navettes 18, une verticale dirigée de bas en haut orthogonalement au plan de déplacement des navettes 18, et une transversale dirigée depuis l'intérieur du circuit vers l'extérieur.

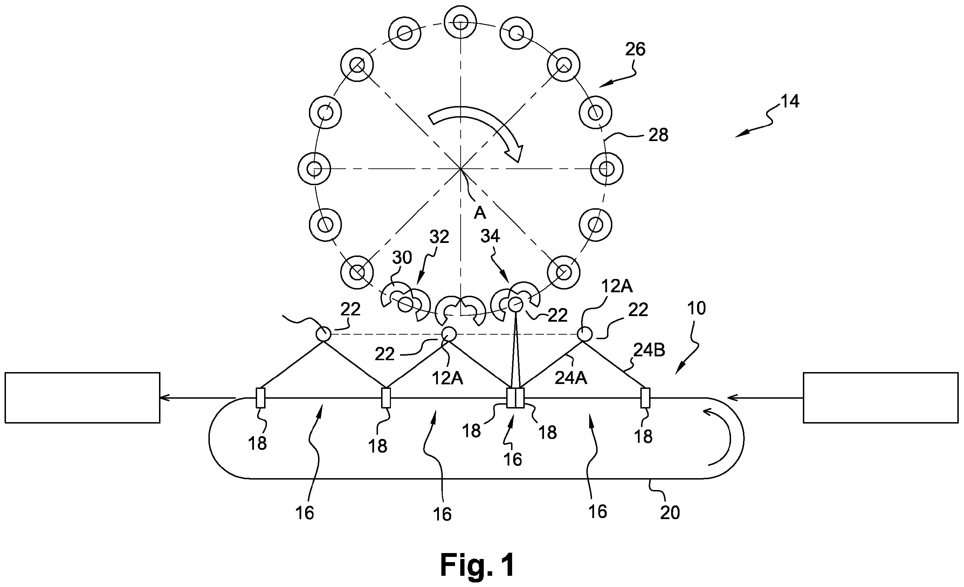

On a représenté à la figure 1 un dispositif 10 de convoyage de récipients 12A, 12B, notamment de récipients réalisés en matériau thermoplastique tel que du polyéthylène téréphtalate (PET). Ce dispositif 10 de convoyage est destiné à être agencé dans une installation 14 de traitement de récipients finaux, tels que des bouteilles, à partir de préformes.

Le dispositif 10 de convoyage de récipients 12A, 12B est ici adapté pour transporter indistinctement des récipients initiaux (préformes), ou intermédiaires ou finaux (bouteilles ou autres).

Le dispositif 10 de convoyage comporte plusieurs chariots 16 de convoyage mobiles, chaque chariot 16 de convoyage étant adapté pour transporter un récipient 12A, 12B. Dans l'exemple représenté à la figure 1, le dispositif 10 de convoyage est équipé de quatre chariots 16.

Chaque chariot 16 de convoyage comporte une première navette 18 susceptible de circuler de manière indépendante le long d'un rail 20 de guidage formant un circuit fermé. Les chariots 16 défilent le long du circuit fermé.

En variante non représentée de l'invention, le rail de guidage forme un circuit ouvert et les chariots effectuent des allers et retours le long du rail de guidage.

Le chariot 16 de convoyage comporte aussi une deuxième navette 18 susceptible de circuler de manière indépendante de la première navette 18 le long du circuit, qu'il soit fermé ou ouvert. La deuxième navette est montée mobile sur ledit rail 20 de guidage.

Le rail 20 de guidage est ici commun aux deux navettes 18.

La première navette 18 et la deuxième navette 18 forment une paire de navettes 18 qui sont agencés directement à la suite l'une de l'autre, sans interposition d'une autre navette entre elles. Par convention, la première navette 18 est ici formée par la navette aval tandis que la deuxième navette 18 est formée par la navette amont en référence au sens de déplacement des navettes.

En variante, chaque navette de la paire est montée sur un rail de guidage associé. En ce cas, les navettes circulent à deux hauteurs différentes.

Les navettes 18 et le rail 20 de guidage font partie d'un moteur linéaire. Dans un tel moteur, le rail 20 de guidage forme un stator qui comporte une série de bobinages (non représentés) répartis le long du rail 20. Chaque bobinage est commandé individuellement pour induire un champ magnétique de manière indépendante des autres bobinages.

Chaque navette 18 est équipée d'un aimant permanent qui réagit au champ magnétique induit par chaque bobinage. De plus, chaque navette 18 est guidée en déplacement le long du rail 20 de guidage.

Le pas entre deux bobinages est suffisamment faible pour permettre de commander les bobinages du rail 20 de guidage de manière à provoquer le déplacement de chaque navette 18 de manière indépendante l'une de l'autre : en d'autres termes, chaque navette peut être pilotée avec une vitesse différente d'une autre ; la vitesse de chaque navette peut être variée ; enfin le sens de déplacement de chaque navette peut être inversé, notamment lorsque le circuit est ouvert et qu'il convient d'effectuer un trajet retour ou encore pour modifier l'écartement entre deux navettes, comme ceci sera expliqué plus loin.

Un tel moteur linéaire est par exemple vendu par la société Beckhoff sous l'appellation "XTS". Pour de plus amples détails concernant cette technologie, on pourra se reporter aux documents US-A1-2013/0.119.897, US-A1-2013/0.035.784, WO-A1-2013/143.783 ou encore WO-A1-2013/143.950.

De manière générale, cette technologie mise en oeuvre dans le cadre de l'invention permet de déplacer toutes les navettes 18 dans le même sens de déplacement le long du circuit, ici un sens antihoraire, mais la vitesse de déplacement de chaque navette 18 est susceptible d'être commandée indépendamment des autres par une unité électronique de commande (non représentée), et le sens peut être inversé.

Cette technologie permet de réaliser aussi bien un circuit ouvert qu'un circuit fermé selon les besoins de la conception.

Chaque chariot 16 est équipé d'un organe 22 de préhension du récipient qui lié mécaniquement à la première navette 18 et à la deuxième navette 18. L'organe 22 de préhension est par exemple formé par une pince qui est apte à saisir automatiquement le récipient 12A, 12B par son col.

Ledit organe 22 de préhension est lié mécaniquement à chacune des première et deuxième navettes 18 de manière que la position transversale de l'organe 22 de préhension soit fonction de l'écartement relatif des deux navettes 18 le long du rail 20 de guidage.

Plus précisément, comme représenté à la figure 1, l'organe 22 de préhension est lié mécaniquement aux première et deuxième navettes 18 par l'intermédiaire d'un mécanisme comportant au moins deux bielles 24A, 24B articulées en ciseau l'une à l'autre, une première bielle 24A étant par ailleurs articulée autour d'un axe de rotation sur la première navette 18, et une seconde bielle 24B étant par ailleurs articulée autour d'un axe de rotation sur la seconde navette 18.

Ainsi une première extrémité proximale de la première bielle 24A est montée articulée autour d'un axe de rotation, (vertical sur les figures) sur la première navette 18, tandis que la deuxième extrémité distale de ladite première bielle 24A porte de manière articulée l'organe 22 de préhension.

De même, une première extrémité proximale de la deuxième bielle 24B est montée articulée autour d'un axe de rotation (également vertical sur les figures) sur la deuxième navette 18, tandis que la deuxième extrémité distale de ladite deuxième bielle 24B porte de manière articulée l'organe 22 de préhension.

Selon une première variante non représentée, l'extrémité distale d'une des deux bielles est montée articulée directement sur le corps de l'autre bielle, tandis que l'organe de préhension est agencé à l'extrémité distale de ladite autre bielle.

Selon une deuxième variante non représentée, les deux bielles sont montées articulées l'une sur l'autre par leur corps, et sont raccordées en pantographe par l'intermédiaire d'autres bielles jusqu'à l'organe de préhension.

Grâce à cet agencement des navettes 18 et des bielles 24A, 24B, la position transversale et la trajectoire de l'organe de préhension peuvent être contrôlés en fonction de l'écartement des deux navettes et de leur vitesse de déplacement.

Ainsi, lorsque les navettes 18 sont éloignées l'une de l'autre, l'organe 22 de préhension vient occuper une première position transversale par rapport au rail 20 de guidage où il se rapproche du rail. Une telle posture dite "normale" est illustrée par les premier, deuxième et quatrième chariots 16 en partant de la gauche à la figure 1.

Lorsque les deux navettes 18 du chariot 16 se rapprochent longitudinalement l'une de l'autre, ceci provoque un éloignement, par déplacement transversal vers l'extérieur, de l'organe 22 de préhension par rapport au rail 20 de guidage. Une telle posture dite "étendue" est illustrée par le troisième chariot 16 en partant de la gauche à la figure 1.

Lorsque les deux navettes 18 restent à distance fixe, l'organe 22 de préhension garde sa distance par rapport au rail 20 de guidage.

On conçoit par ailleurs aisément que la trajectoire de l'organe 22 de préhension est fonction de la vitesse relative de déplacement des navettes 18 entre elles et de leurs vitesses respectives de déplacement sur leur rail.

Des combinaisons infinies de vitesses de déplacement et de séquences d'accélération-décélération, vitesse fixe, arrêt des navettes 18 sur leur rail permettent d'aboutir à un nombre de trajectoires illimitées pour les organes 22 de préhension.

Ainsi, on peut écarter deux navettes d'un chariot en ralentissant la navette 18 amont relativement à la navette aval ou en accélérant la navette aval par rapport à la navette amont. Ceci peut être obtenu en ralentissant la navette amont, et/ou en accélérant la navette aval. Ceci peut encore être obtenu en ralentissant ou accélérant les deux navettes, à condition de maintenir une vitesse supérieure de la navette aval par rapport à la navette amont.

On peut encore écarter les deux navettes d'un même chariot en stoppant la navette 18 amont, tout en continuant à faire avancer la navette 18 aval, soit à la même vitesse, soit en l'accélérant ou en la ralentissant.

On peut aussi écarter les deux navettes d'un même chariot en faisant reculer la navette 18 amont et en stoppant la navette 18 aval, ou en faisant reculer la navette 18 amont tout en continuant à faire avancer la navette 18 aval, soit à la même vitesse, soit en l'accélérant ou en la ralentissant. On peut même faire reculer les deux navettes, à condition que la navette aval recule moins vite que l'amont.

Ce qui précède ne sont que des exemples de possibilités pour faire s'écarter deux navettes d'un même chariot 16.

De manière similaire, on peut rapprocher deux navettes d'un chariot 16 en accélérant la navette 18 amont relativement à la navette aval ou en décélérant la navette aval par rapport à la navette amont. Ceci peut être obtenu en accélérant la navette amont et/ou en décélérant la navette aval. Ceci peut encore être obtenu en ralentissant ou accélérant les deux navettes, à condition de maintenir une vitesse inférieure de la navette aval par rapport à la navette amont.

On peut encore rapprocher les deux navettes d'un même chariot en stoppant la navette 18 aval, tout en continuant à faire avancer la navette 18 amont, soit à la même vitesse, soit en l'accélérant ou en la ralentissant.

On peut aussi rapprocher les deux navettes d'un même chariot en faisant reculer la navette 18 amont et en stoppant la navette 18 aval, ou en faisant reculer la navette 18 amont tout en continuant à faire avancer la navette 18 aval, soit à la même vitesse, soit en l'accélérant ou en la ralentissant. On peut même faire reculer les deux navettes, à condition que la navette amont recule moins vite que l'aval.

Ce qui précède ne sont que des exemples de possibilités pour faire se rapprocher deux navettes d'un même chariot 16.

On conçoit bien que selon les sens de déplacement relatifs des chariots et leurs vitesses (ou accélérations ou décélérations) respectives, on puisse faire parcourir aux organes 22 de préhension des trajectoires bien définies en éloignement ou rapprochement transversal par rapport à un rail portant une navette.

Il est donc possible de faire parcourir aux organes 22 de préhension des trajectoires parfaitement définies courbes, droites, en zigzag, etc., avec à tout instant une vitesse adaptée aux besoins du transfert.

Selon l'invention, la première navette 18 de chaque chariot 16 est formée par la deuxième navette 18 du chariot 16 directement précédent. Les chariots 16 sont ainsi reliés en chaîne par l'intermédiaire des bielles 24A, 24B reliant les navettes 18 avec les organes 22 de préhension associés.

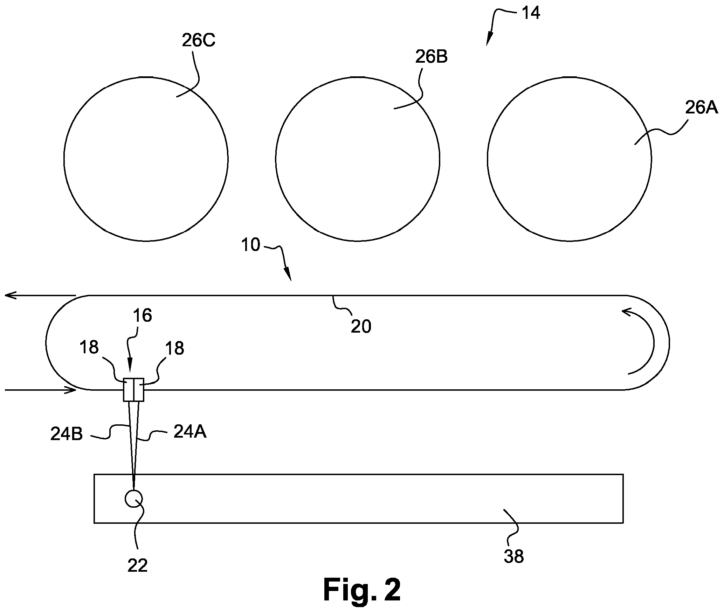

En variante, comme représenté à la figure 2, chaque chariot 16 comporte une paire individuelle de navettes 18 associées. Chaque paire de navettes 18 est ainsi associée à un unique organe 22 de préhension.

On décrit à présent un premier procédé d'utilisation du dispositif 10 de convoyage en référence à la figure 1. Le dispositif 10 de convoyage est ici agencé dans une installation 14 de traitement de récipients, ici une installation de fabrication, comportant au moins une station 26 de traitement de récipients.

La station 26 de traitement comporte un dispositif de transport des récipients le long d'une trajectoire de traitement déterminée. Plus particulièrement, le dispositif de transport est formé par un carrousel 28 qui est monté rotatif autour d'un axe "A" vertical dans un sens horaire. Le carrousel 28 porte à sa périphérie une pluralité d'organes 30 individuels de transport d'un récipient. Chaque organe 30 de transport suit ainsi une trajectoire circulaire autour de l'axe "A".

Le carrousel 28 est apte à transporter des récipients depuis une zone 32 de chargement de récipients 12A non traités jusqu'à une zone 34 de déchargement des récipients 12B traités. Depuis la zone 34 de déchargement jusqu'à la zone 32 de chargement, les organes 30 de transport se déplacent à vide le long d'un tronçon de trajectoire dit "course morte".

Sur l'autre tronçon de trajectoire, chaque organe 30 de transport est destiné à porter un récipient à traiter. Ce tronçon sera par la suite désigné "course utile".

La zone 32 de chargement est avantageusement agencée à proximité de la zone 34 de déchargement de manière à réduire le plus possible la course morte.

Les récipients 12 sont destinés à être chargés puis déchargés sur le même dispositif 10 de convoyage. Ceci permet d'obtenir une installation 14 de fabrication beaucoup plus compacte que les installations de l'état de la technique.

La trajectoire des organes 22 de préhension est superposée successivement avec la zone 34 de chargement puis avec la zone 32 de chargement. Ainsi, la zone 32 de chargement est agencée en aval de la zone 34 de déchargement selon le sens de déplacement des navettes 18.

Plus précisément, un tronçon de la trajectoire des organes 22 de préhension du dispositif 10 de convoyage est agencé à proximité de la course morte des organes 30 de transport.

Comme cela est représenté à la figure 1, l'écartement des navettes 18 de chaque chariot 16 est commandé de manière que la trajectoire de l'organe 22 de préhension soit superposée à la trajectoire de l'organe 30 de transport du carrousel 28 dans la zone de chargement et dans la zone de déchargement.

Etant donné que la zone 32 de chargement est agencée en aval de la zone 34 de déchargement selon le sens de déplacement des chariots 16 de convoyage, un chariot 16 sur deux est laissé libre en amont de la zone 34 de déchargement. En d'autres termes, un chariot 16 sur deux porte un récipient 12A à traiter.

Lorsque le chariot 16 ainsi chargé du récipient 12A à traiter passe à proximité de la zone 32 de chargement, la distance longitudinale entre les deux navettes 18 du chariot 16 et la vitesse de ces deux navettes 18 sont commandées de manière que la trajectoire du chariot 16 soit superposée à la trajectoire de l'organe 30 de transport associé. Ainsi, le transfert du récipient 12A depuis l'organe 22 de préhension jusqu'à l'organe 30 de transport est plus fiable, notamment en cas de cadence élevée. L'organe 22 de préhension ainsi libéré termine sa trajectoire à vide jusqu'à ce qu'il soit de nouveau chargé avec un récipient 12A à traiter.

Après son traitement, le récipient 12B est alors repris par l'un des organes de préhension restés libres. Ainsi, sur le tronçon de trajectoire compris entre la zone 34 de déchargement et la zone 32 de chargement, tous les organes 22 de préhension sont chargés. Un organe 22 de préhension sur deux est chargé avec un récipient 12A non traité, tandis que les autres organes de préhension sont chargés avec un récipient 12B traité.

Lorsque le chariot 16 à vide passe à proximité de la zone 34 de déchargement, la distance longitudinale entre les deux navettes 18 du chariot 16 et leur vitesse sont commandées de manière que la trajectoire du chariot 16 soit superposée à la trajectoire de l'organe 30 de transport associé. Ainsi, le transfert du récipient 12B traité depuis l'organe 30 de transport jusqu'à l'organe 22 de préhension est plus fiable, notamment en cas de cadence élevée.

L'organe 22 de préhension ainsi chargé du récipient 12B traité poursuit sa trajectoire jusqu'à ce que le récipient 12B soit transféré définitivement à des moyens de convoyage suivants. L'organe 22 de préhension ainsi libéré poursuit sa trajectoire à vide jusqu'à la zone 34 de déchargement.

Selon une variante non représentée de l'invention, le dispositif 10 de convoyage est équipé d'un moyen d'asservissement de la commande du déplacement des navettes en fonction de la position transversale, mesurée ou estimée, des organes de préhension, notamment dans les zones de chargement et de déchargement. La position transversale des organes de préhension est par exemple déterminée au moyen d'une caméra, ou de tout autre moyen de détermination de position connus de l'état de la technique. Ainsi, il est possible de corriger de manière dynamique les éventuels défauts de position des pinces par rapport à la position des organes de transport lors du chargement ou du déchargement. Ces défauts de position sont par exemple dus aux tolérances de fabrication et d'assemblage des bielles qui relient l'organe de préhension aux navettes. Ceci permet d'augmenter encore la cadence de défilement des récipients.

Comme représenté à la figure 2, ce procédé d'utilisation peut être généralisé pour le chargement et le déchargement de plusieurs stations de traitement au moyen d'un unique dispositif 10 de convoyage réalisé conformément aux enseignements de l'invention.

Ainsi, l'installation 14 de traitement de récipients illustrée à la figure 2 comporte une station 38 de chauffage de préformes, une station 26A de soufflage des préformes pour les transformer en récipients finaux, une station 26B de remplissage et une station 26C de bouchage.

Les différentes stations 38, 26A, 26B, 26C sont agencées autour du dispositif 10 de convoyage.

La station 38 de chauffage est formée par un tunnel de chauffage qui est agencé parallèlement à une première section du rail 20 de guidage. Ainsi, les organes 22 de préhension se déplacent à l'intérieur de la station de chauffage sur une première section de leur trajectoire. La distance longitudinale entre les deux navettes 18 est commandée à cet effet.

Les stations 26A, 26B, 26C suivantes sont chacune équipées d'un carrousel de transport des récipients le long d'une trajectoire de traitement. Comme cela a été décrit précédemment, un organe 22 de préhension sur deux se déplace à vide. Ainsi, il est possible de charger et décharger les récipients de la station 26A de soufflage avec le même dispositif 10 de convoyage, comme cela a déjà été décrit. En aval de la station 26A de soufflage, un organe 22 de préhension sur deux est ainsi chargé d'un récipient fini, tandis que les autres organes 22 de préhension se déplacent à vide.

Cette configuration permet donc, de la même manière de charger et décharger les récipients sur la station 26B de remplissage, puis sur la station 26C de bouchage au moyen dudit dispositif 10 de convoyage.

Ainsi, le même dispositif 10 de convoyage charge une préforme sur un organe 22 de préhension sur deux en amont de la station 38 de soufflage. Ledit dispositif 10 de convoyage porte les récipients successivement à travers la station 38 de chauffage, puis à travers la station 26A de soufflage, la station 26B de remplissage et enfin la station 26C de bouchage.

A la sortie de la station 26C de bouchage, un organe 22 de préhension est chargé par un récipient fini rempli et bouché qui peut être délivré à un point de sortie tandis que les autres organes de préhension se déplacent à vide. Puis, un nouveau cycle de production démarre.

Cette configuration permet avantageusement de disposer d'une installation 14 de fabrication compacte et peu onéreuse à produire.

Une installation avec un dispositif 10 de convoyage équipé de navettes 18 indépendantes permet de faire varier les trajectoires d'un organe 22 de préhension sur deux, procurant ainsi la souplesse de commande nécessaire pour charger et décharger librement les récipients sur une même station de traitement.

Une installation avec un dispositif 10 de convoyage réalisé selon les enseignements de l'invention permet en outre de s'affranchir de systèmes à cames pour commander la position transversale des récipients. Ceci permet de réduire notablement les opérations de maintenance et de résoudre les problèmes de propreté.

De plus, lors d'un changement de format des récipients, il était nécessaire de réaliser une opération de remplacement des cames pour les adapter au nouveau format. Grâce à la structure très avantageuse du dispositif de convoyage réalisé selon les enseignements de l'invention, la position transversale des récipients peut être adaptée en fonction du format des récipients sans qu'il soit nécessaire de remplacer de pièces. Il suffit en effet de changer la vitesse des navettes afin d'adapter le positionnement transversal des organes de préhension et leur vitesse, en d'autres termes leur trajectoire, en fonction du format du récipient et de la cadence de l'installation.

## Revendications

1. Installation (14) de traitement de récipients, comprenant au moins un dispositif (10) de convoyage de récipients, le dispositif (10) comportant au moins un chariot (16) de convoyage mobile, le chariot (16) de convoyage comportant :
- une première navette (18) susceptible de circuler de manière indépendante le long d'un rail (20) de guidage formant un circuit ;
- et un organe (22) de préhension du récipient qui est lié mécaniquement à ladite première navette (18) ;
dans laquelle le chariot (16) de convoyage comporte une deuxième navette (18) susceptible de circuler de manière indépendante de la première navette (18) le long du circuit, la deuxième navette (18) étant montée mobile sur un rail (20) de guidage, ledit organe (22) de préhension étant lié mécaniquement à chacune des première et deuxième navettes (18) par l'intermédiaire d'un mécanisme comportant au moins une première bielle (24A) et une seconde bielle (24B) articulées en ciseau l'une à l'autre, la première bielle (24A) étant par ailleurs articulée autour d'un axe de rotation sur la première navette, et la seconde bielle (24B) étant par ailleurs articulée autour d'un axe de rotation sur la deuxième navette, de sorte que la position transversale et la trajectoire de l'organe (22) de préhension peuvent être contrôlées en fonction de l'écartement des deux navettes (18) et de leur vitesse de déplacement; dans laquelle le dispositif (10) comporte une pluralité de chariots (16) qui défilent le long du circuit, **caractérisée en ce que** l'installation comprend une station de traitement de récipients, **et en ce que** la première navette (18) de chaque chariot (16) est formée par la deuxième navette (18) du chariot (16) précédent, les chariots (16) étant ainsi reliés en chaîne par l'intermédiaire de la liaison mécanique articulée avec les organes (22) de préhension.

2. Installation (14) de convoyage selon la revendication précédente, **caractérisée en ce que** chaque navette (18) et son rail (20) de guidage associé forment un moteur linéaire.

3. Installation selon la revendication 2, **caractérisée en ce que** le moteur linéaire est en circuit fermé.

4. Installation (14) selon l'une quelconque des revendications 1 à 3, **caractérisé en ce que** les deux navettes (18) sont montées sur un rail (20) de guidage commun.

5. Installation (14) selon l'une quelconque des revendications 1 à 3, **caractérisé en ce que** les deux navettes (18) sont montées sur un rail (20) de guidage distinct.

6. Installation (14) selon l'une quelconque des revendications précédentes, **caractérisé en ce que** chaque chariot (16) comporte une paire individuelle de navettes (18) associées.

7. Procédé d'utilisation d'une installation de traitement de récipients en matériau thermoplastique comportant au moins une station de traitement de récipients et au moins un dispositif (10) de convoyage réalisé selon l'une quelconque des revendications précédentes, l'installation (14) comportant au moins une station (26) de traitement de récipients comportant un dispositif (28) de transport des récipients le long d'une trajectoire de traitement déterminée depuis une première zone (32) de transfert, dite de chargement, jusqu'à une deuxième zone (34) de transfert, dite de déchargement, le dispositif (28) de transport comportant au moins un organe (30) de transport individuel qui se déplace le long d'une trajectoire, dans lequel l'écartement des navettes (18) d'un chariot (16) et leur vitesse de déplacement sont commandés de manière que la trajectoire de l'organe (22) de préhension du chariot (16) soit superposée à un tronçon de trajectoire de l'organe (30) de transport du dispositif (28) de transport dans au moins l'une des zones (32, 34) de transfert.

8. Procédé selon la revendication précédente, **caractérisé en ce que** la zone (32) de chargement est agencée en aval de la zone (34) de déchargement selon le sens de déplacement des chariots (16) de convoyage, la trajectoire de l'organe (22) de préhension étant superposée successivement avec la trajectoire de l'organe (30) de transport dans la zone (34) de déchargement puis dans la zone (32) de chargement.

9. Procédé selon la revendication précédente, **caractérisé en ce que** les récipients (12A, 12B) sont chargés et déchargés sur ledit dispositif (10) de convoyage, un chariot (16) sur deux étant laissé libre en amont de la zone (34) de déchargement selon le sens de déplacement des chariots (16).

## Patentansprüche

1. Anlage (14) zur Behandlung von Behältern, die mindestens eine Vorrichtung (10) zur Beförderung von Behältern beinhaltet, wobei die Vorrichtung (10) mindestens einen beweglichen Beförderungswagen (16) umfasst, wobei der Beförderungswagen (16) Folgendes umfasst:
- einen ersten Schlitten (18), der entlang einer Führungsschiene (20), die einen Kreis bildet, unabhängig umlaufen kann;
- und ein Organ (22) zum Greifen des Behälters, das mit dem ersten Schlitten (18) mechanisch verbunden ist; wobei der Beförderungswagen (16) einen zweiten Schlitten (18) umfasst, der unabhängig von dem ersten Schlitten (18) entlang des Kreises umlaufen kann, wobei der zweite Schlitten (18) auf einer Führungsschiene (20) beweglich montiert ist, wobei das Greiforgan (22) durch einen Mechanismus, der mindestens eine erste Stange (24A) und eine zweite Stange (24B), die scherenartig gelenkig miteinander verbunden sind, umfasst, mit jedem von dem ersten und dem zweiten Schlitten (18) mechanisch verbunden ist, wobei die erste Stange (24A) ferner mit dem ersten Schlitten um eine Rotationsachse gelenkig verbunden ist und die zweite Stange (24B) ferner mit dem zweiten Schlitten um eine Rotationsachse gelenkig verbunden ist, sodass die transversale Position und die Bahn des Greiforgans (22) in Abhängigkeit von dem Abstand zwischen den zwei Schlitten (18) und ihrer Bewegungsgeschwindigkeit gesteuert werden können; wobei die Vorrichtung (10) eine Vielzahl von Wagen (16) umfasst, die entlang des Kreises umlaufen, **dadurch gekennzeichnet, dass** die Anlage eine Station zur Behandlung von Behältern beinhaltet **und dass** der erste Schlitten (18) jedes Wagens (16) durch den zweiten Schlitten (18) des vorhergehenden Wagens (16) gebildet wird, sodass die Wagen (16) durch die mechanische Gelenkverbindung mit den Greiforganen (22) kettenartig verbunden sind.

2. Anlage (14) zur Beförderung nach dem vorhergehenden Anspruch, **dadurch gekennzeichnet, dass** jeder Schlitten (18) und seine assoziierte Führungsschiene (20) einen Linearmotor bilden.

3. Anlage nach Anspruch 2, **dadurch gekennzeichnet, dass** sich der Linearmotor in einem geschlossenen Kreis befindet.

4. Anlage (14) nach einem der Ansprüche 1 bis 3, **dadurch gekennzeichnet, dass** die zwei Schlitten (18) auf einer gemeinsamen Führungsschiene (20) montiert sind.

5. Anlage (14) nach einem der Ansprüche 1 bis 3, **dadurch gekennzeichnet, dass** die zwei Schlitten (18) auf einer gesonderten Führungsschiene (20) montiert sind.

6. Anlage (14) nach einem der vorhergehenden Ansprüche, **dadurch gekennzeichnet, dass** jeder Wagen (16) ein individuelles Paar assoziierter Schlitten (18) umfasst.

7. Verfahren zur Verwendung einer Anlage zur Behandlung von Behältern aus einem thermoplastischen Material, die mindestens eine Station zur Behandlung von Behältern und mindestens eine Beförderungsvorrichtung (10), die nach einem der vorhergehenden Ansprüche ausgeführt ist, umfasst, wobei die Anlage (14) mindestens eine Station (26) zur Behandlung von Behältern umfasst, die eine Vorrichtung (28) für den Transport der Behälter entlang einer vorgegebenen Behandlungsbahn von einem ersten Transferbereich (32), der als Ladebereich bezeichnet wird, zu einem zweiten Transferbereich (34), der als Entladebereich bezeichnet wird, umfasst, wobei die Transportvorrichtung (28) mindestens ein individuelles Transportorgan (30) umfasst, das sich entlang einer Bahn bewegt, wobei der Abstand zwischen den Schlitten (18) eines Wagens (16) und ihre Bewegungsgeschwindigkeit so gesteuert werden, dass die Bahn des Greiforgans (22) des Wagens (16) einen Bahnabschnitt des Transportorgans (30) der Transportvorrichtung (28) in mindestens einem der Transferbereiche (32, 34) überlagert.

8. Verfahren nach dem vorhergehenden Anspruch, **dadurch gekennzeichnet, dass** der Ladebereich (32) gemäß der Bewegungsrichtung der Beförderungswagen (16) stromabwärts des Entladebereichs (34) angeordnet ist, wobei die Bahn des Greiforgans (22) die Bahn des Transportorgans (30) nacheinander erst in dem Entladebereich (34) und dann in dem Ladebereich (32) überlagert.

9. Verfahren nach dem vorhergehenden Anspruch, **dadurch gekennzeichnet, dass** die Behälter (12A, 12B) auf der Beförderungsvorrichtung (10) beladen und entladen werden, wobei jeder zweite Wagen (16) stromaufwärts des Entladebereichs (34) gemäß der Bewegungsrichtung der Beförderungswagen (16) frei gelassen wird.

## Claims

1. Installation (14) for processing containers, comprising at least one device (10) for conveying containers, the device (10) having at least one mobile conveying carriage (16), the conveying carriage (16) having:
- a first shuttle (18) able to circulate independently along a guiding rail (20) forming a circuit;
- and a member (22) for gripping the container that is mechanically connected to said first shuttle (18);
wherein the conveying carriage (16) has a second shuttle (18) able to circulate independently of the first shuttle (18) along the circuit, the second shuttle (18) being mounted so as to be able to move on a guiding rail (20), said gripping member (22) being mechanically connected to each of the first and second shuttles (18) via a mechanism having at least a first rod (24A) and a second rod (24B) that are articulated in a scissor-like manner to one another, the first rod (24A) also being articulated about an axis of rotation on the first shuttle, and the second rod (24B) also being articulated about an axis of rotation on the second shuttle, such that the transverse position and the trajectory of the gripping member (22) can be controlled according to the spacing of the two shuttles (18) and their speed of movement; wherein the device (10) has a plurality of carriages (16) that progress along the circuit, **characterized in that** the installation has a station for processing containers, **and in that** the first shuttle (18) of each carriage (16) is formed by the second shuttle (18) of the preceding carriage (16), the carriages (16) thus being connected in a chain via the articulated mechanical connection with the gripping members (22).

2. Conveying installation (14) according to the preceding claim, **characterized in that** each shuttle (18) and its associated guiding rail (20) form a linear motor.

3. Installation according to Claim 2, **characterized in that** the linear motor is in a closed circuit.

4. Installation (14) according to any one of Claims 1 to 3, **characterized in that** the two shuttles (18) are mounted on a common guiding rail (20).

5. Installation (14) according to any one of Claims 1 to 3, **characterized in that** the two shuttles (18) are mounted on a separate guiding rail (20).

6. Installation (14) according to any one of the preceding claims, **characterized in that** each carriage (16) has an individual pair of associated shuttles (18).

7. Method for using an installation for processing containers made of thermoplastic material that has at least one station for processing containers and at least one conveying device (10) produced according to any one of the preceding claims, the installation (14) having at least one station (26) for processing containers that has a device (28) for transporting the containers along a determined processing trajectory from a first transfer zone (32), called loading zone, to a second transfer zone (34), called unloading zone, the transport device (28) having at least one individual transport member (30) that moves along a trajectory, wherein the spacing of the shuttles (18) of a carriage (16) and their speed of movement are controlled such that the trajectory of the gripping member (22) of the carriage (16) is superimposed on a portion of the trajectory of the transport member (30) of the transport device (28) in at least one of the transfer zones (32, 34).

8. Method according to the preceding claim, **characterized in that** the loading zone (32) is arranged downstream of the unloading zone (34) in the direction of movement of the conveying carriages (16), the trajectory of the gripping member (22) being superimposed successively with the trajectory of the transport member (30) in the unloading zone (34) then in the loading zone (32) .

9. Method according to the preceding claim, **characterized in that** the containers (12A, 12B) are loaded and unloaded on said conveying device (10), one carriage (16) in two being left free upstream of the unloading zone (34) in the direction of movement of the carriages (16).
